# EUROPÄISCHE PATENTANMELDUNG

(11) **EP 1 810 801 A1**
(43) Veröffentlichungstag der Anmeldung: **25.07.2007**
(21) Anmeldenummer: 07000698.6
(22) Anmeldetag: 15.01.2007
(51) Int. Cl.: B27B 5/065, B23D 59/00, B27M 1/08, B23D 47/04, B27B 31/00

(54) **System zum Herstellen von plattenförmigen Werkstücken**

(30) Priorität: 18.01.2006 DE 102006002403
(71) Anmelder: Homag Holzbearbeitungssysteme AG, 72296 Schopfloch (DE)
(72) Erfinder: Gauss, Achim, 72280 Dornstetten/Hallwangen (DE); Gringel, Martin, 72379 Hechingen (DE)
(74) Vertreter: HOFFMANN EITLE

(57) **Zusammenfassung**

Die Erfindung stellt ein System (100) zum Herstellen von plattenförmigen Werkstücken aus Holz, holzartigen Werkstoffen, Holzaustauschwerkstoffen, Kunststoffen oder dergleichen bereit, umfassend eine Steuereinrichtung (110) mit einem Bestelleingang, der eingerichtet ist, eine Gruppe von Werkstücken entsprechend einer eingegangenen Bestellung datenmäßig zusammenzustellen, wobei die Steuereinrichtung (110) ferner eine Datenaufbereitung aufweist, die eingerichtet ist, Bearbeitungsprogramme für den Rohzuschnitt der Werkstücke aus einer oder mehreren Rohplatten bevorzugt verschnittoptimiert zu generieren, mindestens ein Bearbeitungszentrum (120) zum Zuschneiden der Werkstücke und/oder zum Bearbeiten der roh zugeschnitten Werkstücke, und mindestens eine Fertigungseinrichtung (130) zum Ausführen weiterer Bearbeitungsvorgänge an den in dem mindestens einen Bearbeitungszentrum bearbeiteten Werkstücken, wobei das mindestens eine Bearbeitungszentrum (120) und die mindestens eine Fertigungseinrichtung (130) mit der Steuereinrichtung (110) datenmäßig in Verbindung stehen.

## Beschreibung

### Technisches Gebiet

Die Erfindung betrifft ein System zum Herstellen von plattenförmigen Werkstücken aus Holz, holzartigen Werkstoffen, Holzaustauschwerkstoffen, Kunststoffen oder dergleichen, mit mindestens einem Bearbeitungszentrum zum Zuschneiden der Werkstücke und/oder zum Bearbeiten der roh zugeschnitten Werkstücke, und mit einer Steuereinrichtung.

### Stand der Technik

Die Herstellung bzw. Bearbeitung plattenförmiger Werkstücke wie beispielsweise Möbelkorpusplatten, Küchenfronten oder dergleichen erfolgt üblicherweise unter Einsatz eines Bearbeitungszentrums oder einer Durchlaufmaschine mit einer vorbestimmten Konfiguration.

Bearbeitungszentren dieser Art sind als Portal- oder Ausleger-Konstruktionen seit langem in den verschiedensten Ausführungsformen bekannt. Bei den Portal-Konstruktionen (vgl. beispielsweise DE 10026069) werden die Bearbeitungsbereiche von einem waagrecht verlaufenden Teil der Portalkonstruktion überspannt. Bei den Ausleger-Konstruktionen überspannt ein Kragarm die Bearbeitungsbereiche.

Unter einem Bearbeitungsbereich ist jede Art von Bearbeitungsauflage zu verstehen, auf der die plattenförmigen Werkstücke abgelegt und in irgendeiner Weise bearbeitet werken können. Bekannt sind in diesem Zusammenhang herkömmliche Tischkonstruktionen, sogenannte Konsolen- oder Rastertische oder auch Kombinationen dieser Tischkonstruktionen.

Zur Durchführung der Bearbeitungsvorgänge müssen die Werkstücke auf den Bearbeitungsbereichen unverschiebbar fixiert werden. Hierzu werden Aufspanneinrichtungen eingesetzt, die die Werkstücke mechanisch oder pneumatisch auf den Tischkonstruktionen halten. Bekannt sind in diesem Zusammenhang mechanische Einrichtungen, wie Niederhalter, sog. Klemmspanner, oder pneumatische Einrichtungen, sog. Saugspanner o.dgl. Einrichtungen, sowie Kombinationen hiervon.

Mit Verfahrensweisen und Bearbeitungszentren der bekannten Art können Werkstücke komplett bearbeitet werden. Dabei wird vorbereitend ein in einem vorangegangenen separaten Arbeitsgang hergestellter Rohzuschnitt auf den jeweiligen Bearbeitungsbereich aufgespannt und dann durch die Bearbeitungseinheit unter Einsatz der für den jeweiligen Arbeitsgang erforderlichen, meist von einem Magazin eingewechselten Bearbeitungswerkzeuge oder Bearbeitungsaggregate die gewünschte Bearbeitung durchgeführt.

Das Anordnen und Aufspannen der Rohzuschnitte auf dem Bearbeitungsbereich erfolgt meist von Hand über eine Bedienungsperson, die nach abgeschlossener Bearbeitung die Werkstücke auch wieder von Hand vom Bearbeitungsbereich löst und in einem Zwischenlager ablegt.

Die Rohzuschnitte werden meist über eine Sägeanlage aus einer Platte unter Zuhilfenahme eines Optimierungsprogramms (sogenanntes Nesting) herausgelöst.

Es ist auch bereits bekannt, anstelle einer herkömmlichen Sägeanlage speziell ausgelegte Bearbeitungszentren einzusetzen und über diese durch Aufteilen der Platten die benötigten Rohzuschnitte herzustellen. Auch in derartigen Fällen werden die aufzuteilenden Platten von Hand in den speziell ausgelegten Bearbeitungszentren angeordnet und die erzeugten Rohzuschnitte nach erfolgtem Aufteilungsvorgang ebenfalls von Hand dem in der Bearbeitungskette nachgeschalteten Bearbeitungszentrum zur abschließenden Bearbeitung zugeführt.

Die oben diskutierten Maschinen ermöglichen prinzipiell die rationelle Durchführung unterschiedlichster Bearbeitungsvorgänge wie Formatbearbeitung, Kantenanbringung, etc.

Allerdings nimmt der geforderte Grad der Individualisierung der Werkstücke weiter zu. Um dem zu begegnen wurde vorgeschlagen, bei einzelnen (stark individualisierten) Werkstücken nur einen Teil der Bearbeitungsschritte (z. B. Zuschneiden und Formatieren) auf einer bestimmten Maschine (z. B. BAZ oder Durchlaufmaschine) durchzuführen, und die übrigen Bearbeitungsschritte (z. B. Kantenabbringung) auf einer anderen Maschine (z. B. BAZ oder Durchlaufmaschine) durchzuführen. Diese Vorgehensweise führte jedoch zu einem hohen Planungsaufwand und einem wenig effizienten Produktionsprozess.

### Darstellung der Erfindung

Der Erfindung liegt die Aufgabe zugrunde, ein System zum Herstellen von plattenförmigen Werkstücken aus Holz, holzartigen Werkstoffen, Holzaustauschwerkstoffen, Kunststoffen oder dergleichen bereitzustellen, dass eine flexible und effiziente Herstellung plattenförmiger Werkstücke mit unterschiedlichster Ausgestaltung ermöglicht.

Diese Aufgabe wird erfindungsgemäß durch ein System mit den Merkmalen von Anspruch 1 gelöst. Vorteilhafte Weiterbildungen der Erfindung sind in den abhängigen Ansprüchen angegeben.

Durch das erfindungsgemäße System wird insbesondere ermöglicht, den Produktionsprozess vollständig elektronisch zu planen und zu steuern, wodurch der Planungsaufwand minimiert und der Verfahrensablauf optimiert wird.

Bei einer besonders bevorzugten Ausführungsform der vorliegenden Erfindung weist das Bearbeitungszentrum des Systems die Merkmale des Patentanspruchs 5 auf. Durch die erfindungsgemäße Ausgestaltung des Bearbeitungszentrums wird ein maschinenintegriertes Handlingsystem geschaffen, das die Funktionalität eines derartigen Bearbeitungszentrums erheblich erweitert und die Bedienungsperson von einer Vielzahl von Rüst- und Werkstückhandhabungsaufgaben entlastet.

Sofern aufgrund des maschinenintegrierten Handlingsystems auf den Einsatz mehrerer jeweils speziell auf einen Fertigungsprozess eingerichtete Bearbeitungszentren verzichtet werden kann, ergibt sich neben einer höheren Produktivität zwangsläufig ein geringeres Investitionsvolumen und ein geringerer Platzbedarf.

Die Funktionalität eines erfindungsgemäß ausgestalteten Bearbeitungszentrums kann noch erweitert werden, wenn die Steuereinrichtung für die Bearbeitungseinheit sowohl ein Aufteilungsprogramm als auch ein Bearbeitungsprogramm aufweist, und wenn die Steuereinrichtung für die Greifeinrichtung ein Handhabungsprogramm aufweist.

Grundsätzlich können die Bearbeitungseinheit und die Greifeinrichtung in jeder beliebigen Weise am Bearbeitungszentrum angeordnet werden. Vorteilhaft ist es jedoch, wenn die Bearbeitungseinheit und die Greifeinrichtung an einem im Wesentlichen waagrecht verlaufenden und quer zu seiner Erstreckungsrichtung horizontal hin und her verfahrbaren Führungsbalken gelagert sind.

Die Greifeinrichtung kann an dem Führungsbalken in jeder geeigneten Weise hin und her verfahrbar gelagert sein. Eine besonders vorteilhafte Ausgestaltung ergibt sich jedoch, wenn die Bearbeitungseinheit an der einen und die Greifeinrichtung an der anderen Seite des Führungsbalkens hin und her verfahrbar gelagert ist.

Je nach Art der zu verarbeitenden Werkstücke kann die Greifeinrichtung in der verschiedensten Weise ausgestaltet sein. So kann die Greifeinrichtung mechanische Einrichtungen, wie beispielsweise Hebebacken, Hebezapfen oder Hebeleisten aufweisen. Vorteilhaft ist es jedoch in den überwiegenden Anwendungsfällen pneumatische Einrichtungen, wie Saugheber oder Saugtraversen einzusetzen, zumal diese eine sehr schonende Handhabung auch bei empfindlichen Oberflächen ermöglichen.

Bei einem bevorzugten, als Ausleger-Konstruktion konzipierten Bearbeitungszentrum erstreckt sich der als Kragarm ausgebildete Führungsbalken in Y-Richtung, wobei an dessen einer Seite die Bearbeitungseinheit und an dessen anderer Seite die Greifeinrichtung jeweils in Y-Richtung verfahrbar gelagert sind. Bei dieser bevorzugten Ausführungsform ist der Kragarm in X-Richtung entlang einer langgestreckten Maschinenbasis verfahrbar geführt. Bei einem derartigen Maschinenkonzept ist es zweckmäßig, entlang der Maschinenbasis zufuhrseitig einen Plattenstapelbereich, im Anschluss daran einen ersten Bearbeitungsbereich, daran anschließend einen zweiten Bearbeitungsbereich und abfuhrseitig einen Ablagebereich, in X-Richtung jeweils hintereinander liegend anzuordnen.

Mit einer derartigen Anordnung kann auf einfache Weise mittels der erfindungsgemäßen Greifeinrichtung die aufzuteilende Platte vom Plattenstapelbereich entnommen und auf dem ersten Bearbeitungsbereich abgelegt und dort mittels der Aufspannrichtung festgelegt werden. Im Anschluss daran führt die Bearbeitungseinheit die notwendige Aufteilung in Rohzuschnitte durch, die nach abgeschlossener Aufteilung mittels der Greifeinrichtung Stück für Stück dem ersten Bearbeitungsbereich entnommen und auf dem zweiten Bearbeitungsbereich abgelegt werden. An diesen Rohzuschnitten erfolgt dann nach dem Festspannen die sogenannte Komplettbearbeitung durch die Bearbeitungseinheit. Nach erfolgter Komplettbearbeitung wird das fertig bearbeitete Werkstück dann von der Greifeinrichtung wieder aufgenommen und im Ablagebereich zum Weitertransport oder zur Weiterbearbeitung abgelegt.

Um den Produktionsablauf in dem erfindungsgemäßes System besonders effizient und zügig auszugestalten, ist gemäß einer Weiterbildung der Erfindung vorgesehen, dass es ferner eine automatisierte Fördereinrichtung aufweist, welche den ersten und/oder zweiten Bearbeitungsbereich des Bearbeitungszentrums mit mindestens einer Fertigungseinrichtung zur Förderung von Werkstücken verbindet und datenmäßig mit der Steuereinrichtung in Verbindung steht.

### Kurze Beschreibung der Zeichnungen

- Fig. 1: zeigt ein Blockdiagramm des Aufbaus einer Ausführungsform des Systems gemäß der vorliegenden Erfindung;
- Fig. 2: zeigt schematisch eine Draufsicht eines im Rahmen des erfindungsgemäßen Systems einsetzbaren Bearbeitungszentrums.

### Ausführliche Beschreibung bevorzugter Ausführungsformen

Bevorzugte Ausführungen der vorliegenden Erfindung werden nachfolgend ausführlich unter Bezugnahme auf die begleitenden Zeichnungen beschrieben.

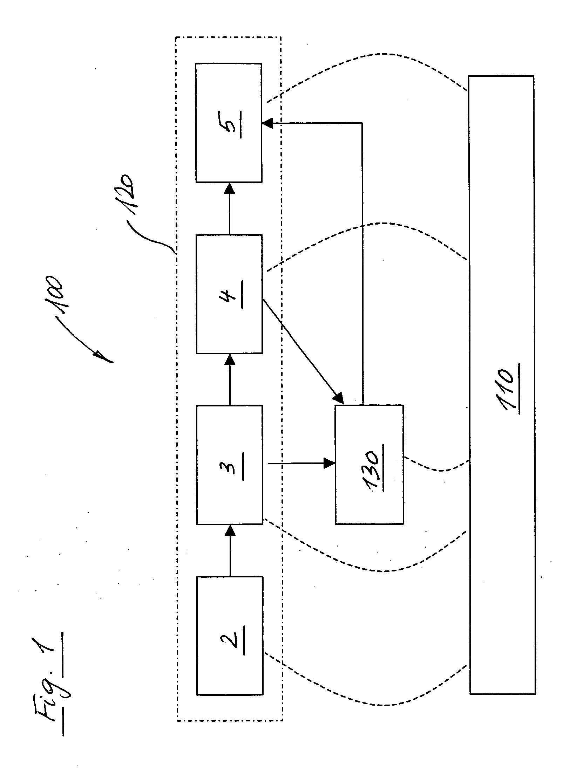

Ein Blockdiagramm des Aufbaus einer Ausführungsform des Systems 100 gemäß der vorliegenden Erfindung ist in Fig. 1 schematisch dargestellt. Das in Fig. 1 gezeigte System 100 dient zum Herstellen von plattenförmigen Werkstücken aus Holz, holzartigen Werkstoffen, Holzaustauschwerkstoffen, Kunststoffen oder dergleichen, wie sie beispielsweise in der Möbelindustrie verbreitet Anwendung finden. Das gezeigte System 100 umfasst in der vorliegenden Ausführungsform eine Steuereinrichtung 110, ein Bearbeitungszentrum 120 und eine Fertigungseinrichtung 130. Dabei steht die Steuereinrichtung 110 mit dem Bearbeitungszentrum 120 bzw. dessen Komponenten (die unten stehend noch ausführlicher beschrieben werden) sowie der Fertigungseinrichtung 130 datenmäßig in Verbindung, wie durch gestrichelte Linien in Fig. 1 dargestellt. Ferner umfasst das erfindungsgemäße System 100 eine automatisierte Fördereinrichtung, die in Fig. 1 nicht ausdrücklich dargestellt ist, deren Förderwege in Fig. 1 jedoch durch Pfeile schematisch angegeben sind.

Die Steuereinrichtung 110 beinhaltet einen Bestelleingang, der eingerichtet ist, eine Gruppe von Werkstücken entsprechend einer eingegangenen Bestellung datenmäßig zusammenzustellen, und eine Datenaufbereitung, die eingerichtet ist, Bearbeitungsprogramme für den Rohzuschnitt der Werkstücke aus einer oder mehreren Rohplatten zu generieren, und zwar bevorzugt verschnittoptimiert.

Bei der Fertigungseinrichtung 130 kann es sich im Rahmen der vorliegenden Erfindung prinzipiell um eine beliebige Bearbeitungsmaschine handeln, wie beispielsweise ein Bearbeitungszentrum oder eine Durchlaufmaschine. Bei vielen Anwendungsfällen wird die Fertigungseinrichtung 130 eine Schleifmaschine und/oder eine Oberflächenveredelungsmaschine sein bzw. beinhalten.

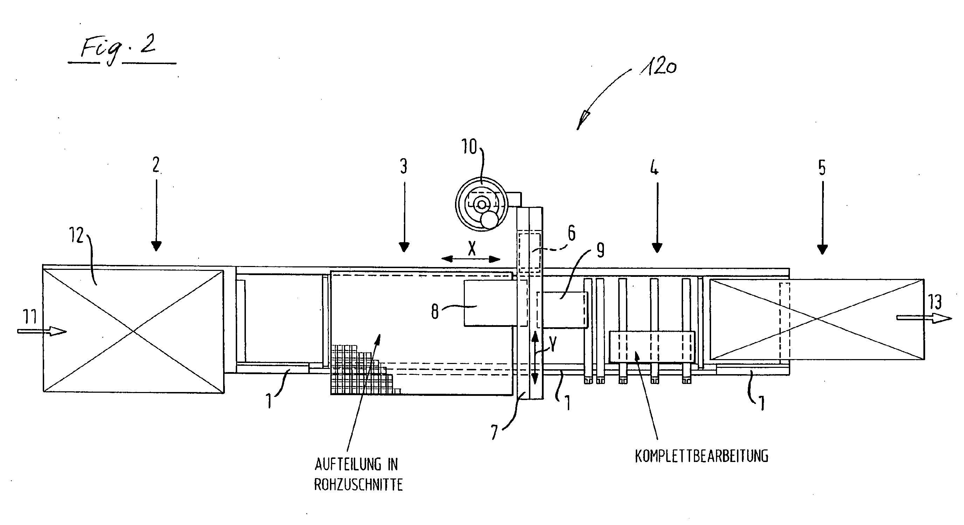

Das in dem System 100 zum Einsatz kommende Bearbeitungszentrum 120 ist in Fig. 2 in einer schematischen Draufsicht näher dargestellt.

Fig. 2 zeigt eine langgestreckte Maschinenbasis 1, auf der (von links nach rechts betrachtet) ein Plattenstapelbereich 2, ein erster Bearbeitungsbereich 3, ein zweiter Bearbeitungsbereich 4 sowie ein Ablagebereich 5 hintereinander angeordnet sind.

Die Maschinenbasis 1 kann auch derart gestaltet sein, dass sie lediglich den ersten Bearbeitungsbereich 3 und den zweiten Bearbeitungsbereich 4 trägt, während der Plattenstapelbereich 2 und der Ablagebereich 5 als separate Bereiche neben der Maschinenbasis 1 angeordnet sind.

Die Maschinenbasis 1 erstreckt sich (wie der Pfeil über dem ersten Bearbeitungsbereich 3 zeigt) in X-Richtung des Bearbeitungszentrums.

Auf der in Fig. 2 oberen Seite ist die Maschinenbasis 1 mit einer sich ebenfalls in X-Richtung erstreckenden Führung ausgestattet, an der über einen Fahrwagen eine sich in vertikaler Richtung erstreckende Säule 6 in X-Richtung verfahrbar geführt ist, die im Bereich ihres oberen Endes einen in Y-Richtung und horizontal verlaufenden Führungsbalken 7 trägt, der die Maschinenbasis überspannt und einen Kragarm bildet. Bei dem dargestellten bevorzugten Ausführungsbeispiel handelt es sich somit um eine sogenannte Ausleger-Konstruktion.

Der Führungsbalken 7 besitzt auf jeder Seite in Y-Richtung verlaufende Führungen (nicht dargestellt). Diese Führungen tragen auf der in Fig. 2 linken Seite eine Bearbeitungseinheit 8 und auf der in Fig. 2 rechten Seite eine Greifeinrichtung 9. Sowohl die Bearbeitungseinheit 8 als auch die Greifeinrichtung 9 sind an der jeweiligen Führung in Y-Richtung hin und her verfahrbar. Der Führungsbalken 7 mit der Bearbeitungseinheit 8 und der Greifeinrichtung 9 wiederum ist über die Säule 6 in X-Richtung entlang der Maschinenbasis 1 über den Fahrwagen verfahrbar. Die in X-Richtung entlang der Maschinenbasis verlaufende Führung, der auf dieser angeordnete Fahrwagen, die Säule 6 und der Führungsbalken 7 bilden eine Verfahreinrichtung für die Bearbeitungseinheit 8 und die Greifeinrichtung 9.

An dem Führungsbalken 7 ist im Bereich der Säule 6 ein Tellermagazin 10 angeordnet, aus dem eine Bearbeitungsspindel (nicht dargestellt) der Bearbeitungseinheit 8 die für den jeweiligen Bearbeitungsvorgang notwendigen Bearbeitungswerkzeuge oder Bearbeitungsaggregate im sogenannten Pick-up-Verfahren entnehmen und nach erfolgter Bearbeitung wieder ablegen kann.

Im vorliegenden Ausführungsbeispiel ist der erste Bearbeitungsbereich 3 als sogenannter Rastertisch und der zweite Bearbeitungsbereich 4 als sogenannter Konsolentisch ausgebildet.

Die Arbeitsweise des in Fig. 2 dargestellten Bearbeitungszentrums, das nach dem erfindungsgemäßen Verfahren arbeitet, ist wie folgt:

In einem vorangegangenen Arbeitsvorgang sind auf den Plattenstapelbereich 2 beispielsweise aus der Richtung des Pfeils 11 Platten 12 gefördert und dort abgestapelt worden.

Je nach Reichweite des Führungsbalkens 7 werden die Platten 12 dann entweder von Hand oder über die Greifeinrichtung 9 vom Plattenstapel abgehoben und auf den ersten Bearbeitungsbereich 3 aufgelegt und dort über Aufspanneinrichtungen (nicht dargestellt) festgelegt.

Im Anschluss daran wird die Platte 12 über die Bearbeitungseinheit 8 in die erforderliche Anzahl von Rohzuschnitten aufgeteilt. Während dieses Aufteilvorganges ist die Greifeinrichtung 9 in der Ruhestellung.

Nach der Aufteilung in Rohzuschnitte erfasst die Greifeinrichtung 9 einen Rohzuschnitt und fördert diesen auf den zweiten Bearbeitungsbereich 4. In dieser Phase ist die Bearbeitungseinheit 8 in ihrer Ruhestellung.

Sobald der Rohzuschnitt auf dem zweiten Bearbeitungsbereich 4 durch Aufspannvorrichtungen (nicht dargestellt) festgelegt ist, erfolgt die Komplettbearbeitung über die Bearbeitungseinheit 8. In dieser Phase ist die Greifeinrichtung 9 in ihrer Ruhestellung. Das Erfassen eines Rohzuschnittes durch die Greifeinrichtung, das Ablegen auf dem zweiten Bearbeitungsbereich 4 sowie die daran anschließende Komplettbearbeitung durch die Bearbeitungseinheit 8 wird so lange fortgesetzt, bis alle auf dem ersten Bearbeitungsbereich 3 befindlichen Rohzuschnitte einer Komplettbearbeitung auf dem zweiten Bearbeitungsbereich 4 unterzogen, d.h. abgearbeitet sind.

Ist die Komplettbearbeitung abgeschlossen, erfasst die Greifeinrichtung 9 das fertige Werkstück und legt dieses auf dem Ablagebereich 5 ab. Von dort wird das Werkstück dann in Richtung des Pfeils 13 entnommen oder einer weiteren Bearbeitung zugeführt.

Alternativ zu einer Komplettbearbeitung der plattenförmigen Werkstücke im zweiten Bearbeitungsbereich 4 besteht im Rahmen des erfindungsgemäßen Systems die Möglichkeit, die plattenförmigen nach dem Aufteilen im ersten Bearbeitungsbereich 3 oder auch nach der Bearbeitung im zweiten Bearbeitungsbereich 4 der Fertigungseinrichtung 130 zuzuführen, und zwar unter der Steuerung der Steuereinrichtung 110. Hierdurch wird die Flexibilität des Produktionsprozesses extrem erhöht, während weiterhin eine gute Prozesseffizient erzielt wird.

## Patentansprüche

1. System (100) zum Herstellen von plattenförmigen Werkstücken aus Holz, holzartigen Werkstoffen, Holzaustauschwerkstoffen, Kunststoffen oder dergleichen, umfassend
eine Steuereinrichtung (110) mit einem Bestelleingang, der eingerichtet ist, eine Gruppe von Werkstücken entsprechend einer eingegangenen Bestellung datenmäßig zusammenzustellen, wobei die Steuereinrichtung (110) ferner eine Datenaufbereitung aufweist, die eingerichtet ist, Bearbeitungsprogramme für den Rohzuschnitt der Werkstücke aus einer oder mehreren Rohplatten bevorzugt verschnittoptimiert zu generieren,
mindestens ein Bearbeitungszentrum (120) zum Zuschneiden der Werkstücke und/oder zum Bearbeiten der roh zugeschnitten Werkstücke, und
mindestens eine Fertigungseinrichtung (130) zum Ausführen weiterer Bearbeitungsvorgänge an den in dem mindestens einen Bearbeitungszentrum bearbeiteten Werkstücken,
wobei das mindestens eine Bearbeitungszentrum (120) und die mindestens eine Fertigungseinrichtung (130) mit der Steuereinrichtung (110) datenmäßig in Verbindung stehen.

2. System nach Anspruch 1, **dadurch gekennzeichnet, dass** mindestens eine Fertigungseinrichtung (130) eine Schleifmaschine ist.

3. System nach Anspruch 1 oder 2, **dadurch gekennzeichnet, dass** mindestens eine Fertigungseinrichtung (130) eine Durchlaufmaschine, insbesondere zur Format- oder Kantenbearbeitung, ist.

4. System nach einem der Ansprüche 1 bis 3, **dadurch gekennzeichnet, dass** mindestens eine Fertigungseinrichtung (130) eine Oberflächenveredelungsmaschine ist.

5. System nach einem der vorhergehenden Ansprüche, **dadurch gekennzeichnet, dass** das Bearbeitungszentrum (120) aufweist
- mindestens zwei Bearbeitungsbereiche (3, 4) für die Werkstücke, welche mit Aufspanneinrichtungen für die Werkstücke ausgestattet sind,
- mindestens eine die Bearbeitungsbereiche (3, 4) abdeckende Bearbeitungseinheit (8), die mit mindestens einer Arbeitsspindel ausgestattet ist, in die Bearbeitungswerkzeuge und/oder Bearbeitungsaggregate einwechselbar sind,
- sowie eine Verfahreinrichtung, mit der die Bearbeitungseinheit (8) über mindestens zwei Achsen (X- und Y-Achse) verfahrbar gelagert ist,
wobei,
- eine Greifeinrichtung (9) für die plattenförmigen Werkstücke vorgesehen ist, und
- die Bearbeitungseinheit (8) und die Greifeinrichtung (9) in das Bearbeitungszentrum integriert und zumindest in einer Achse (X-Achse) gemeinsam über die Verfahreinrichtung bewegbar sind.

6. System nach Anspruch 5, **dadurch gekennzeichnet,**
- **dass** in Bearbeitungsrichtung betrachtet dem ersten Bearbeitungsbereich (3) ein Plattenstapelbereich (2) vorgeschaltet und dem zweiten bzw. letzten Bearbeitungsbereich (4) ein Ablagebereich (5) nachgeschaltet ist, und
- **dass** der Verfahrweg der Verfahreinrichtung derart gestaltet ist, dass die Greifeinrichtung (9) über den vorgeschalteten Plattenstapelbereich (2) und den nachgeschalteten Ablagebereich (5) verfahrbar ist.

7. System nach Anspruch 5 oder 6, **dadurch gekennzeichnet, dass** die Steuereinrichtung (110) für die Bearbeitungseinheit (8) sowohl ein Aufteilungsprogramm als auch ein Bearbeitungsprogramm aufweist, und dass die Steuereinrichtung (110) für die Greifeinrichtung (9) ein Handhabungsprogramm aufweist.

8. System nach Anspruch 5 oder 6 sowie 7, **dadurch gekennzeichnet, dass** die Bearbeitungseineinheit (8) und die Greifeinrichtung (9) an einem im wesentlichen waagrecht verlaufenden und quer zu seiner Erstreckungsrichtung horizontal hin und her verfahrbaren Führungsbalken (7) gelagert sind.

9. System nach Anspruch 8, **dadurch gekennzeichnet, dass** sich der Führungsbalken (7) in Y-Richtung erstreckt.

10. System nach Anspruch 9, **dadurch gekennzeichnet, dass** die Bearbeitungseinheit (8) an der einen und die Greifeinrichtung (9) an der anderen Seite des Führungsbalkens (7) hin und her verfahrbar gelagert sind.

11. System nach einem oder mehreren der Ansprüche 5 bis 10, **dadurch gekennzeichnet, dass** die Greifeinrichtung (9) als mechanische Einrichtung ausgebildet ist.

12. System nach einem oder mehreren der Ansprüche 5 bis 10, **dadurch gekennzeichnet, dass** die Greifeinrichtung (9) als pneumatische Einrichtung ausgebildet ist.

13. System nach einem oder mehreren der vorhergehenden Ansprüche 6 bis 12, mit einem sich in Y-Richtung erstreckenden, als Kragarm ausgebildeten Führungsbalken (7), an dessen einer Seite die Bearbeitungseinheit (8) und an dessen anderer Seite die Greifeinrichtung (9) jeweils in Y-Richtung unabhängig voneinander verfahrbar gelagert sind, wobei der Kragarm in X-Richtung entlang einer langgestreckten Maschinenbasis (1) verfahrbar gelagert ist, wobei entlang der Maschinenbasis zufuhrseitig (11) ein Plattenstapelbereich (2), im Anschluss daran ein erster Bearbeitungsbereich (3), daran anschließend ein zweiter Bearbeitungsbereich (4) und abfuhrseitig (13) ein Ablagebereich (5) in X-Richtung hintereinander angeordnet sind.

14. System nach einem der vorhergehenden Ansprüche, **dadurch gekennzeichnet, dass** es ferner eine automatisierte Fördereinrichtung aufweist, welche den ersten (3) und/oder zweiten (4) Bearbeitungsbereich des Bearbeitungszentrums (120) mit mindestens einer Fertigungseinrichtung (130) zur Förderung von Werkstücken verbindet und datenmäßig mit der Steuereinrichtung (110) in Verbindung steht.

15. System nach einem der vorhergehenden Ansprüche, **dadurch gekennzeichnet, dass** es ferner eine Einrichtung zur Reinigung der Bearbeitungsbereiche bzw. Werkstücke und/oder eine Einrichtung zur Kennzeichnung der Werkstücke aufweist, die bevorzugt datenmäßig mit der Steuereinrichtung (110) in Verbindung stehen.
